# EUROPEAN PATENT APPLICATION

(11) **EP 2 995 993 A1**
(43) Date of publication of application: **16.03.2016**
(21) Application number: 15156660.1
(22) Date of filing: 26.02.2015
(51) Int. Cl.: G02F 1/1333

(54) **Display device and manufacturing method thereof**

(30) Priority: 11.09.2014 KR 20140120271
(71) Applicant: Samsung Display Co., Ltd., Gyeonggi-do (KR)
(72) Inventor: Oh, Dong Youb, 74-6 Seoul (KR); Lee, Hee-Keun, 109-1001 Suwon-si Gyeonggi-do (KR)
(74) Representative: Dr. Weitzel & Partner

(57) **Abstract**

Embodiments relate to a display device in which damage of constituent elements formed on a substrate is reduced when applying a force bending the substrate, and a manufacturing method thereof. The display device according to an exemplary embodiment includes: a substrate; a thin film transistor disposed on the substrate; a pixel electrode connected to the thin film transistor; a roof layer disposed on the pixel electrode to be spaced apart from the pixel electrode with a plurality of microcavities therebetween; a first groove disposed at at least one of a ceiling surface of the roof layer, an inner wall surface of the roof layer, and a corner at which the ceiling surface and the inner wall surface meet; a liquid crystal layer filling the microcavities; and an encapsulation layer disposed on the roof layer to seal the microcavities.

## Description

### BACKGROUND

### (a) Technical Field

The present application relates to a display device and a manufacturing method thereof. More particularly, the present application relates to a display device in which damage of constituent elements formed on a substrate when applying a force that bends the substrate is reduced, and a manufacturing method thereof.

### (b) Description of the Related Art

A liquid crystal display is currently one of the most widely used flat panel displays, and includes two display panels on which field generating electrodes such as a pixel electrode and a common electrode are formed and a liquid crystal layer that is disposed therebetween. An image is displayed by applying a voltage to a field generating electrode to generate an electric field on the liquid crystal layer, which determines alignment of liquid crystal molecules of the liquid crystal layer and controls polarization of incident light.

The two display panels forming the liquid crystal display may be a thin film transistor array panel and an opposing display panel. In the thin film transistor array panel, a gate line transmitting a gate signal and a data line transmitting a data signal are formed to be crossed, and a thin film transistor connected to the gate line and the data line and a pixel electrode connected to the thin film transistor may be formed. The opposing display panel may include a light blocking member, a color filter, a common electrode, etc. If necessary, the light blocking member, the color filter, and the common electrode may be formed in the thin film transistor array panel.

However, in the conventional liquid crystal display, two substrates are inevitably required, and the constituent elements are respectively formed on the two substrates such that the display device is heavy, the cost is high, and the processing time is long.

The above information disclosed in this Background section is only for enhancement of understanding of the background and therefore it may contain information that does not form the prior art that is already known in this country to a person of ordinary skill in the art.

### SUMMARY

Embodiments relate to a display device with reduced weight, thickness, cost, and processing time by manufacturing the display device by using one substrate, and a manufacturing method thereof.

Embodiments provide a display device in which damage of constituent elements formed on a substrate is reduced when applying a force bending the substrate, and a manufacturing method thereof.

A display device according to an exemplary embodiment includes: a substrate; a thin film transistor disposed on the substrate; a pixel electrode connected to the thin film transistor; a roof layer disposed on the pixel electrode to be spaced apart from the pixel electrode with a plurality of microcavities therebetween; a first groove disposed at at least one of a ceiling surface of the roof layer, an inner wall surface of the roof layer, and a corner at which the ceiling surface and the inner wall surface meet; a liquid crystal layer filling the microcavities; and an encapsulation layer disposed on the roof layer to seal the microcavities.

A second groove disposed at an upper surface of the roof layer may be further included.

The second groove may be positioned between the adjacent microcavities.

The first groove and the second groove may have a "V" shape.

The first groove may be positioned at the corner and may be made with a "V" shape or a "U" shape.

The first groove may be positioned at at least one side corner among both side corners of the roof layer.

The first groove may be positioned at the inner wall surface of the roof layer, and the inner wall surface may have a wave shape or a step shape.

A cross-section of the first groove may include two oblique sides, and a length of the two oblique sides may be more than about 3 µm and less than about 35 µm.

An angle between two oblique sides may be more than about 5 degrees and less than about 75 degrees.

The substrate may include a flexible material.

The deformation of the first groove may be changed according to bending of the substrate.

A size of the first groove may be reduced according to the bending of the substrate.

The roof layer may include an organic layer.

A method for manufacturing a display device according to an exemplary embodiment includes: forming a thin film transistor on a substrate; forming a pixel electrode connected to the thin film transistor; forming a sacrificial layer on the pixel electrode; forming a roof layer on the sacrificial layer; patterning the roof layer to expose a part of the sacrificial layer; removing the sacrificial layer to form microcavities between the pixel electrode and the roof layer; injecting a liquid crystal material inside the microcavities to form a liquid crystal layer; and forming an encapsulation layer to cover a portion in which the microcavities are exposed to seal the microcavities, wherein a protrusion is formed at at least one among an upper surface of the sacrificial layer, a side surface of the sacrificial layer, and a corner at which the upper surface and the side surface meet.

A first groove may be formed at at least one among a ceiling surface of the roof layer, an inner wall surface of the roof layer, and a corner at which the ceiling surface and the inner wall surface meet.

The first groove of the roof layer may be positioned on the protrusion of the sacrificial layer.

A second groove may be formed at an upper surface of the roof layer.

A first groove may be positioned at a corner at which a ceiling surface of the roof layer and an inner wall surface of the roof layer meet, and may be formed with a "V" shape or a "U" shape.

A first groove may be positioned at an inner wall surface of the roof layer, and the inner wall surface may be formed with a wave shape or a step shape.

A cross-section of a first groove may include two oblique sides, a length between the two oblique sides may be more than about 3 µm and less than about 35 µm, and an angle between the two oblique sides may be more than about 5 degrees and less than about 75 degrees.

The display device and the manufacturing method thereof according to the above-described exemplary embodiment have the following effects.

The display device and the manufacturing method according to an exemplary embodiment form the display device by using one substrate such that weight, thickness, cost, and process time may be reduced.

Also, by forming the groove at the roof layer, the roof layer may be prevented from being damaged when applying the force bending the substrate.

### BRIEF DESCRIPTION OF THE DRAWINGS

FIG. 1 is a top plan view of a display device according to an exemplary embodiment.
FIG. 2 is an equivalent circuit diagram of one pixel of the display device in accordance with the exemplary embodiment.
FIG. 3 is a layout view illustrating a part of the display device in accordance with the exemplary embodiment.
FIG. 4 is a cross-sectional view of the display device in accordance with the exemplary embodiment taken along line IV-IV of FIG. 3.
FIG. 5 is a cross-sectional view illustrating the display device in accordance with the exemplary embodiment taken long line V-V of FIG. 3.
FIG. 6 is a schematic cross-sectional view of a display device according to an exemplary embodiment.
FIG. 7 is an enlarged cross-sectional view of a part A of FIG. 6.
FIG. 8 is a schematic cross-sectional view of a display device according to an exemplary embodiment.
FIG. 9 is an enlarged cross-sectional view of a part A of FIG. 8.
FIG. 10 is a graph showing intensity of a force acting on a roof layer when bending a display device according to an exemplary embodiment along with a comparative example.
FIG. 11 and FIG. 12 are cross-sectional photographs of a display device according to an exemplary embodiment.
FIGS. 13, 14, 15, 16, 17, 18, 19, and 20 are schematic cross-sectional views of exemplary variations of a display device according to an exemplary embodiment.
FIGS. 21, 22, 23, and 24 are process cross-sectional views of a manufacturing method of a display device according to an exemplary embodiment.

### DETAILED DESCRIPTION OF THE EMBODIMENTS

The inventive concept will be described more fully hereinafter with reference to the accompanying drawings, in which exemplary embodiments are shown. As those skilled in the art would realize, the described embodiments may be modified in various different ways, all without departing from the spirit or scope of the inventive concept.

In the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

A display device in accordance with an exemplary embodiment will be briefly described with reference to accompanying drawings.

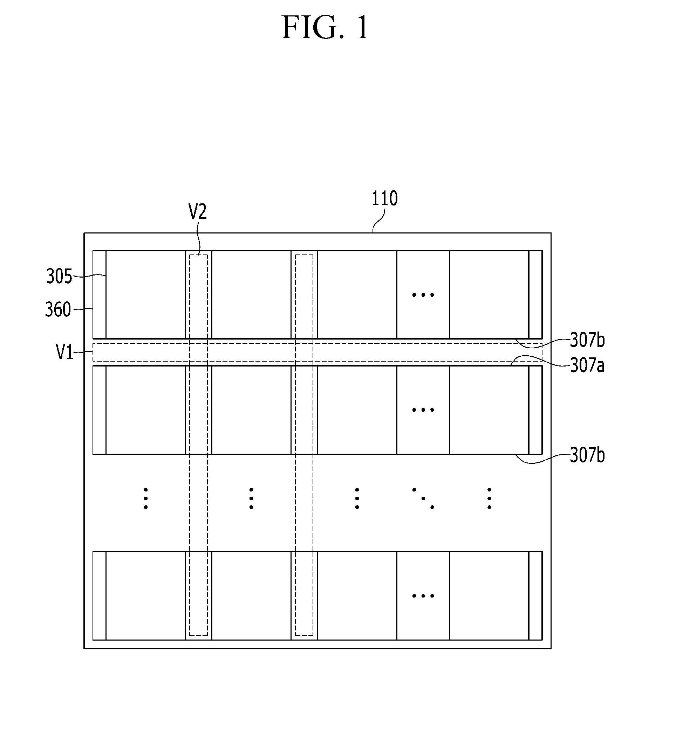

FIG. 1 is a top plan view illustrating the display device in accordance with the exemplary embodiment.

The display device according to the exemplary embodiment includes a substrate 110 formed of a material such as glass and plastic.

Microcavities 305 covered by roof layers 360 are formed on the substrate 110. The roof layers 360 are extended in a row direction, and a plurality of microcavities 305 are formed under one roof layer 360.

The microcavities 305 may be arranged in a matrix form, and a first valley V1 is positioned between vertically adjacent microcavities 305, while a second valley V2 is positioned between horizontally adjacent microcavities 305.

A plurality of roof layers 360 may be separated from each other with the first valley V1 interposed therebetween. The microcavities 305 may not be covered by the roof layer 360 but may be exposed to the outside at portions which are in contact with the first valley V1. These portions are referred to as injection holes 307a and 307b.

The injection holes 307a and 307b are formed at both edges of the each microcavity 305. The injection holes 307a and 307b include a first injection hole 307a and a second injection hole 307b, and the first injection hole 307a is formed so as to expose a lateral surface of a first edge of the microcavity 305, while the second injection hole 307b is formed so as to expose a lateral surface of a second edge of the microcavity 305. The lateral surface of the first edge and the lateral surface of the second edge of the microcavity 305 face each other.

Each roof layer 360 is formed to be spaced apart from the substrate 110 between the adjacent second valleys V2 to form the microcavity 305. That is, the roof layer 360 is formed so as to cover the remaining lateral surfaces, except for the lateral surfaces of the first edge and the second edge in which the injection holes 307a and 307b are formed.

The aforementioned structure of the display device according to the exemplary embodiment is just an example, and various modifications are feasible. For example, a disposition form of the microcavity 305, the first valley V1, and the second valley V2 may be changed, the plurality of roof layers 360 may be connected to each other in the first valley V1, and a portion of each roof layer 360 may be formed to be spaced apart from the substrate 110 in the second valley V2 to connect adjacent microcavities 305 to each other.

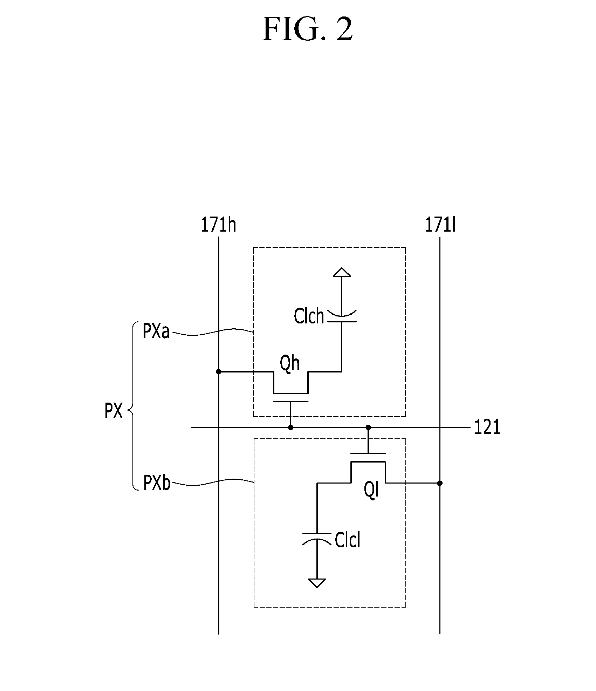

Hereinafter, one pixel of the display device in accordance with the exemplary embodiment will be briefly described with reference to FIG. 2.

FIG. 2 is an equivalent circuit diagram of one pixel of the display device in accordance with the exemplary embodiment.

The display device of the present exemplary embodiment includes a plurality of signal lines 121, 171h, and 1711, and a plurality of pixels PX connected to the plurality of signal lines 121, 171h, and 1711. Although not shown, the plurality of pixels PX may be arranged in a matrix form including a plurality of pixel rows and a plurality of pixel columns.

Each pixel PX may include a first subpixel PXa and a second subpixel PXb. The first subpixel PXa and the second subpixel PXb may be vertically disposed. In this case, the first valley V1 may be positioned in a direction of a pixel row between the first subpixel PXa and the second subpixel PXb, and the second valley V2 may be positioned between the plurality of pixel columns.

The signal lines 121, 171h, and 1711 include a gate line 121 for transmitting a gate signal, and a first data line 171h and a second data line 1711 for transmitting different data voltages.

The display device in accordance with the exemplary embodiment includes a first switching element Qh connected to the gate line 121 and the first data line 171h, and a second switching element Ql connected to the gate line 121 and the second data line 1711.

A first liquid crystal capacitor Clch connected with the first switching element Qh is formed in the first subpixel PXa, and a second liquid crystal capacitor Clcl connected with the second switching element Ql is formed in the second subpixel PXb.

A first terminal of the first switching element Qh is connected with the gate line 121, a second terminal thereof is connected with the first data line 171h, and a third terminal thereof is connected to the first liquid crystal capacitor Clch.

A first terminal of the second switching element Ql is connected with the gate line 121, a second terminal thereof is connected with the second data line 1711, and a third terminal thereof is connected to the second liquid crystal capacitor Clcl.

An operation of the liquid crystal display in accordance with the exemplary embodiment will now be described. When a gate-on voltage is applied to the gate line 121, the first switching element Qh and the second switching element Ql connected to the gate line 121 enter a turn-on state, and the first and second liquid crystal capacitors Clch and Clcl are charged by different data voltages transmitted through the first and second data lines 171h and 1711. The data voltage transmitted by the second data line 1711 is lower than the data voltage transmitted by the first data line 171h. Accordingly, the second liquid crystal capacitor Clcl is charged with a lower voltage than that of the first liquid crystal capacitor Clch, thereby improving side visibility.

However, the embodiments are not limited thereto, and the arrangement design of the thin film transistors to apply the different voltage to two subpixels PXa and PXb may be variously changed. Also, the pixel PX includes at least two subpixels, or may be made of the single pixel.

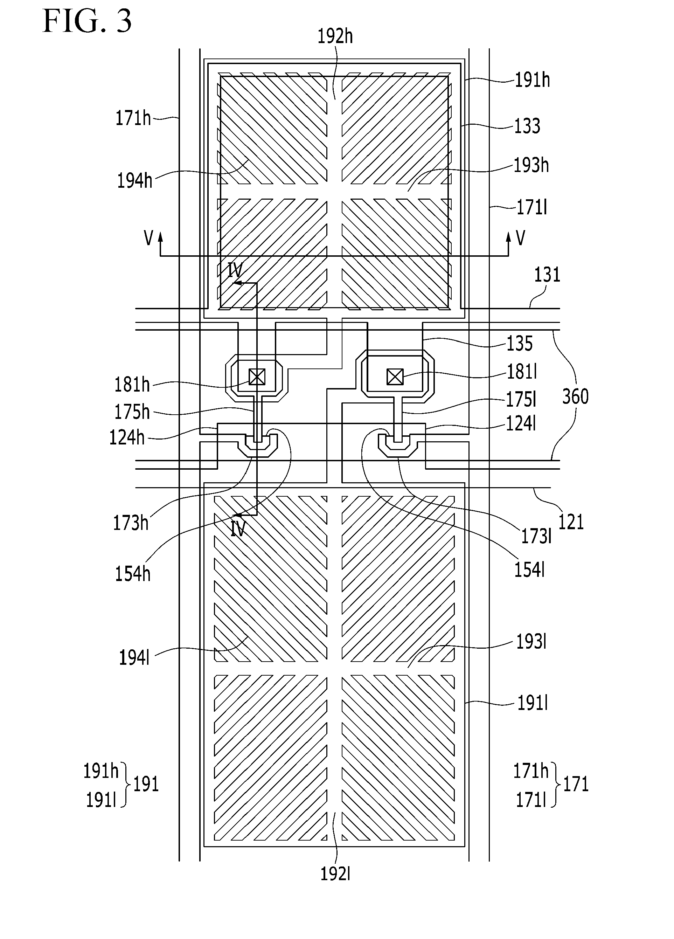

Hereinafter, a structure of one pixel of the liquid crystal display in accordance with the exemplary embodiment will be described with reference to FIGS. 3 to 5.

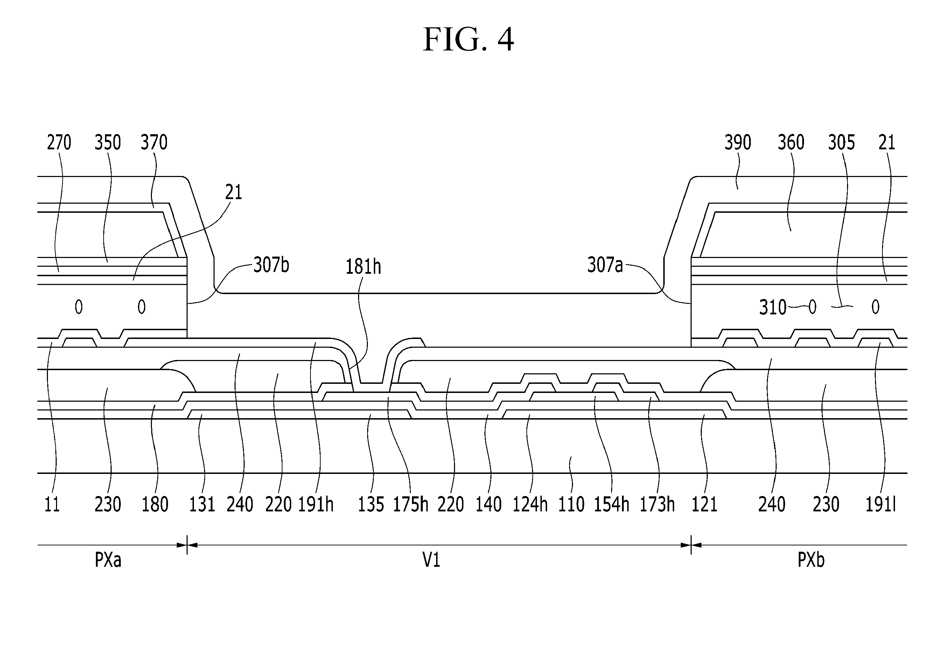

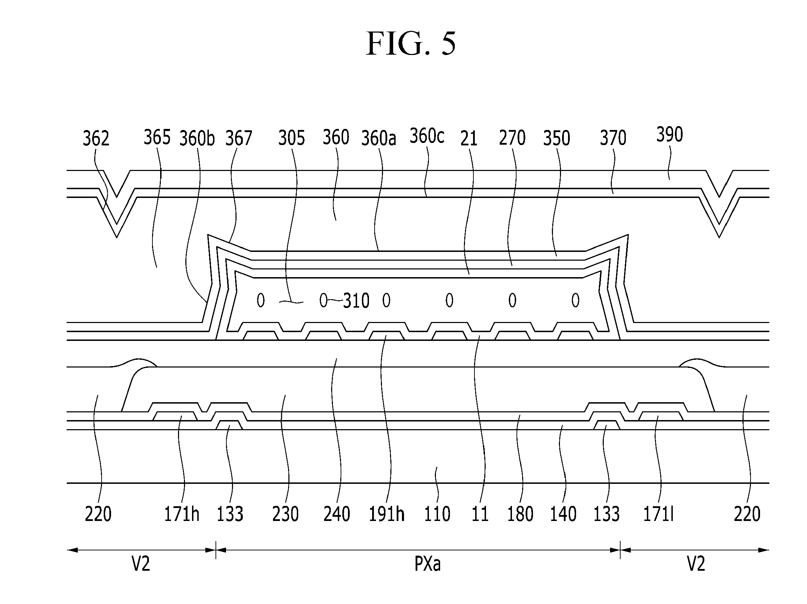

FIG. 3 is a top plan view illustrating one pixel of a display device according to an exemplary embodiment, FIG. 4 is a cross-sectional view of the display device taken along the line IV-IV of FIG. 3 according to an exemplary embodiment, and FIG. 5 is a cross-sectional view of the display device taken along the line V-V of FIG. 3 according to an exemplary embodiment.

Referring to FIG. 3 to FIG. 5, the gate line 121 and a first gate electrode 124h and a second gate electrode 1241 protruding from the gate line 121 are formed on the substrate 110.

The gate line 121 mainly extends in a horizontal direction, and transmits a gate signal. The gate line 121 is positioned between the two microcavities 305 which are adjacent in a column direction. That is, the gate line 121 is positioned at the first valley V1. The first gate electrode 124h and the second gate electrode 1241 upwardly protrude in a plane view at an upper side of the gate line 121. The first gate electrode 124h and the second gate electrode 1241 are connected to each other to form one protrusion. However, the embodiments are not limited thereto, and the protruding form of the first gate electrode 124h and the second gate electrode 1241 may be variously modified.

A storage electrode line 131 and storage electrodes 133 and 135 protruding from the storage electrode line 131 may be further formed on the substrate 110.

The storage electrode line 131 extends in a direction parallel to the gate line 121, and is formed to be spaced apart from the gate line 121. A constant voltage may be applied to the storage electrode line 131. The storage electrode 133 protruded on the storage electrode line 131 is formed to enclose an edge of the first subpixel area PXa. The storage electrode 135 protruded under the storage electrode line 131 is formed to be adjacent to the first gate electrode 124h and the second gate electrode 1241.

A gate insulating layer 140 is formed on the gate line 121, the first gate electrode 124h, the second gate electrode 1241, the storage electrode line 131, and the storage electrodes 133 and 135. The gate insulating layer 140 may be formed of an inorganic insulating material, such as a silicon nitride (SiNx) and a silicon oxide (SiOx). Further, the gate insulating layer 140 may be formed of a single layer or a multilayer.

A first semiconductor 154h and a second semiconductor 1541 are formed on the gate insulating layer 140. The first semiconductor 154h may be positioned on the first gate electrode 124h, and the second semiconductor 1541 may be positioned on the second gate electrode 1241. The first semiconductor 154h may be elongated to a lower portion of the first data line 171h, and the second semiconductor 1541 may be elongated to a lower portion of the second data line 1711. The first semiconductor layer 154h and the second semiconductor 1541 may be formed of amorphous silicon, polycrystalline silicon, a metal oxide, or the like.

An ohmic contact member (not illustrated) may be formed on each of the first semiconductor 154h and the second semiconductor 1541. The ohmic contact members may be made of a silicide or a material such as n+ hydrogenated amorphous silicon on which an n-type impurity is doped at a high concentration.

The first data line 171h, the second data line 1711, a first source electrode 173h, a first drain electrode 175h, a second source electrode 1731, and a second drain electrode 1751 are formed on the first semiconductor 154h, the second semiconductor 1541, and the gate insulating layer 140.

The first data line 171h and the second data line 1711, collectively the data line 171, transfer a data signal, and mainly extend in a second direction to cross the gate line 121 and the storage electrode line 131. The data line 171 is positioned between the two microcavities 305 which are adjacent in the row direction. That is, the data line 171 is positioned at the second valley V2.

The first data line 171h and the second data line 1711 transmit different data voltages. For example, the data voltage transmitted by the second data line 171I is lower than the data voltage transmitted by the first data line 171h.

The first source electrode 173h is formed so as to protrude on the first gate electrode 124h from the first data line 171h, and the second source electrode 1731 is formed so as to protrude on the second gate electrode 1241 from the second data line 1711. Each of the first drain electrode 175h and the second drain electrode 1751 has one wide end portion and the other rod-shaped end portion. The wide end portions of the first drain electrode 175h and the second drain electrode 1751 overlap the storage electrode 135 downwardly protruding from the storage electrode line 131. Each of the rod-shaped end portions of the first drain electrode 175h and the second drain electrode 1751 is partially surrounded by the first source electrode 173h and the second source electrode 1731.

The first and second gate electrodes 124h and 124I, the first and second source electrodes 173h and 1731, and the first and second drain electrodes 175h and 1751 form first and second thin film transistors (TFT) Qh and Ql together with the first and second semiconductors 154h and 1541, and channels of the thin film transistors Qh and Ql are formed in the semiconductors 154h and 1541 between the source electrodes 173h and 1731 and the drain electrodes 175h and 1751, respectively.

A passivation layer 180 is formed on the first data line 171h, the second data line 1711, the first source electrode 173h, the first drain electrode 175h, the first semiconductor 154h exposed between the first source electrode 173h and the first drain electrode 175h, the second source electrode 1731, the second drain electrode 1751, and the second semiconductor 1541 exposed between the second source electrode 1731 and the second drain electrode 1751. The passivation layer 180 may be formed of an organic insulating material or an inorganic insulating material, and may be formed of a single layer or a multilayer.

A color filter 230 is formed in each pixel PX on the passivation layer 180.

Each color filter 230 may express one of primary colors such as three primary colors including red, green, and blue. However, the colors displayed by the color filter 230 are not limited to the three primary colors such as red, green, and blue, and the color filter 230 may express cyan, magenta, yellow, and white-based colors, etc. The color filter 230 may not be formed at the first valley V1 and/or the second valley V2.

A light blocking member 220 is formed at a region between the adjacent color filters 230. The light blocking member 220 is formed on a boundary of the pixel PX and the thin film transistor to prevent light leakage. That is, the light blocking member 220 may be formed in the first valley V1 and the second valley V2. The color filter 230 and the light blocking member 220 may be overlapped with each other in a partial region.

A first insulating layer 240 may be further formed on the color filter 230 and the light blocking member 220. The first insulating layer 240 may be formed of an organic insulating material, and may serve to planarize the upper surface of the color filter 230 and the light blocking member 220. The first insulating layer 240 may be made of a dual layer including a layer made of an organic insulating material and a layer made of an inorganic insulating material. The first insulating layer 240 may be omitted if necessary.

In the passivation layer 180 and the first insulating layer 240, a first contact hole 181h extending to and exposing the wide end portion of the first drain electrode 175h is formed, and a second contact hole 1811 extending to and exposing the wide end portion of the second drain electrode 1751 is formed.

A pixel electrode 191 is formed on the first insulating layer 240. The pixel electrode 191 may be made of a transparent metal material such as indium tin oxide (ITO) and indium zinc oxide (IZO).

The pixel electrode 191 includes a first subpixel electrode 191h and a second subpixel electrode 1911 which are separated from each other with the gate line 121 and the storage electrode line 131 therebetween. The first subpixel electrode 191h and the second subpixel electrode 1911 are disposed above and below the pixel PX based on the gate line 121 and the storage electrode line 131. That is, the first subpixel electrode 191h and the second subpixel electrode 1911 are separated from each other with the first valley V1 therebetween, the first subpixel electrode 191h is positioned in the first subpixel PXa, and the second subpixel electrode 1911 is positioned in the second subpixel PXb.

The first subpixel electrode 191h is connected with the first drain electrode 175h through the first contact hole 181h, and the second subpixel electrode 1911 is connected to the second drain electrode 1751 through the second contact hole 1811. Accordingly, when the first thin film transistor Qh and the second thin film transistor Ql are turned on, the first subpixel electrode 191h and the second subpixel electrode 1911 receive different data voltages from the first drain electrode 175h and the second drain electrode 1751.

An overall shape of each of the first subpixel electrode 191h and the second subpixel electrode 1911 is a quadrangle, and the first subpixel electrode 191h and the second subpixel electrode 1911 include cross stems including horizontal stems 193h and 1931 and vertical stems 192h and 1921 crossing the horizontal stems 193h and 1931, respectively. Further, each of the first subpixel electrode 191h and the second subpixel electrode 1911 includes a plurality of minute branches 194h and 1941.

The pixel electrode 191 is divided into four subregions by the horizontal stems 193h and 1931 and the vertical stems 192h and 1921. The minute branches 194h and 1941 obliquely extend from the horizontal stems 193h and 1931 and the vertical stems 192h and 1921, and the extending direction may form an angle of approximately 45 degrees or 135 degrees with the gate line 121 or the horizontal stems 193h and 1931. Further, directions in which the minute branches 194h and 1941 of the two adjacent subregions extend may be perpendicular to each other.

In the exemplary embodiment, the first subpixel electrode 191h and the second subpixel electrode 1911 may further include outer stems surrounding outsides of the first subpixel PXa and the second subpixel PXb, respectively.

The layout form of the pixel, the structure of the thin film transistor, and the shape of the pixel electrode described above are just exemplified, and the embodiments are not limited thereto and may be variously modified.

A common electrode 270 is formed on the pixel electrode 191 so as to be spaced apart from the pixel electrode 191 at a predetermined distance. The microcavity 305 is formed between the pixel electrode 191 and the common electrode 270. That is, the microcavity 305 is surrounded by the pixel electrode 191 and the common electrode 270. The common electrode 270 is formed in the row direction and is disposed on the microcavity 305 and at the second valley V2. The common electrode 270 is formed to cover the upper surface and the side of the microcavity 305. A width and an area of the microcavity 305 may be variously modified according to a size and resolution of the display device.

The embodiments are not limited thereto, and the common electrode 270 may be formed based on the insulating layer disposed between the pixel electrode 191 and the common electrode 270. In this case, the microcavities 305 may be formed on the common electrode 270.

The common electrode 270 may be made of a transparent metal material such as indium-tin oxide (ITO), indium-zinc oxide (IZO), and the like. The constant voltage may be applied to the common electrode 270, and an electric field may be formed between the pixel electrode 191 and the common electrode 270.

Alignment layers 11 and 21 are formed on the pixel electrode 191 and under the common electrode 270.

The alignment layers 11 and 21 include a first alignment layer 11 and a second alignment layer 21. The first alignment layer 11 and the second alignment layer 21 may be a vertical alignment layers, and may be made of an alignment material such as polyamic acid, polysiloxane, and polyimide. The first alignment layer 11 and the second alignment layer 21 may be connected at the side surface of the second microcavity 305.

The first alignment layer 11 is formed on the pixel electrode 191. The first alignment layer 11 may be formed directly on the first insulating layer 240 that is not covered by the pixel electrode 191.

The second alignment layer 21 is formed under the common electrode 270 to face the first alignment layer 11.

A liquid crystal layer formed of liquid crystal molecules 310 is formed in the microcavity 305 positioned between the pixel electrode 191 and the common electrode 270. The liquid crystal molecules 310 have negative dielectric anisotropy, and may be erected in a vertical direction on the substrate 110 in a state where an electric field is not applied. That is, vertical alignment may be implemented.

The first subpixel electrode 191h and the second subpixel electrode 1911, to which the data voltage is applied, generate an electric field together with the common electrode 270 to determine a direction of the liquid crystal molecules 310 positioned in the microcavity 305 between the two electrodes 191 and 270. Luminance of light passing through the liquid crystal layer is changed according to the thusly determined direction of the liquid crystal molecules 310.

A second insulating layer 350 may be further formed on the common electrode 270. The second insulating layer 350 may be formed of an inorganic insulating material, such as a silicon nitride (SiNx) and a silicon oxide (SiOx), and may be omitted if necessary.

The roof layer 360 is formed on the second insulating layer 350. The roof layer 360 may be formed of an organic material. The roof layer 360 is formed in the row direction and is disposed on the microcavity 305 and at the second valley V2. The roof layer 360 is formed to cover the upper surface and the side surface of the microcavities 305. The roof layer 360 may be hardened by a hardening process to maintain the shape of the microcavity 305. The roof layer 360 is formed to be spaced apart from the pixel electrode 191 with the microcavity 305 interposed therebetween.

A ceiling surface 360a of the roof layer 360 covers the upper surface of the microcavities 305, and an inner wall surface 360b of the roof layer 360 covers the side surface of the microcavities 305. A first groove 367 is formed at a corner at which the ceiling surface 360a and the inner wall surface 360b of the roof layer 360 meet each other. A cross-sectional shape of the first groove 367 may be a "V" shape. The ceiling surface 360a of the roof layer 360 meets the inner wall surface 360b at both sides, thereby including two corners. The first groove 367 may be all formed at both side corners of the roof layer 360.

The common electrode 270 positioned under the roof layer 360 may be formed of a shape that the corner of the common electrode 270 at which the ceiling surface and the inner wall surface of the common electrode 270 meet is protruded. The corner of the common electrode 270 corresponds to the corner of the roof layer 360 at which the ceiling surface 360a and inner wall surface 360b of the roof layer 360 meet.

A second groove 362 is formed at an upper surface 360c of the roof layer 360. A cross-sectional shape of the second groove 362 may be a "V" shape.

A partition 365 is formed between a plurality of microcavities 305, and the partition 365 forms a portion of the roof layer 360. The partition 365 is formed at the second valley V2, whereby separating the adjacent microcavities 305. The second groove 362 is positioned at the upper surface of the partition 365 of the roof layer 360. Accordingly, the second groove 362 is positioned at the second valley V2.

Again referring to FIG. 1 to FIG. 5, the common electrode 270 and the roof layer 360 are formed to expose a portion of the side surface of the edge of the microcavity 305, and portions where the microcavity 305 is not covered by the common electrode 270 and the roof layer 360 are referred to as injection holes 307a and 307b. The injection holes 307a and 307b include the first injection hole 307a, through which a lateral surface of a first edge of the microcavity 305 is exposed, and the second injection hole 307b, through which a lateral surface of a second edge of the microcavity 305 is exposed. The first edge and the second edge are edges facing each other, and for example, in the plane view, the first edge may be an upper edge of the microcavity 305 and the second edge may be a lower edge of the microcavity 305. In the manufacturing process of the display device, the microcavities 305 are exposed by the injection holes 307a and 307b, so that an alignment solution, a liquid crystal material, or the like may be injected into the microcavities 305 through the injection holes 307a and 307b.

A third insulating layer 370 may be further formed on the roof layer 360. The third insulating layer 370 may be made of an inorganic insulating material such as a silicon nitride (SiNx) and a silicon oxide (SiOx). The third insulating layer 370 may be formed to cover the top and the side of the roof layer 360. The third insulating layer 370 serves to protect the roof layer 360 made of an organic material, and may be omitted if necessary.

An encapsulation layer 390 may be formed on the third insulating layer 370. The encapsulation layer 390 is formed to cover the injection holes 307a and 307b where a part of the microcavity 305 is exposed to the outside. That is, the encapsulation layer 390 may seal the microcavity 305 so that the liquid crystal molecules 310 formed in the microcavity 305 are not discharged to the outside. The encapsulation layer 390 contacts the liquid crystal molecules 310, and as a result, the encapsulation layer 390 may be made of a material which does not react with the liquid crystal molecules 310. For example, the encapsulation layer 390 may be made of parylene and the like.

The encapsulation layer 390 may be formed by a multilayer such as a double layer and a triple layer. The double layer is configured by two layers made of different materials. The triple layer is configured by three layers, and materials of adjacent layers are different from each other. For example, the encapsulation layer 390 may include a layer made of an organic insulating material or a layer made of an inorganic insulating material.

Although not illustrated, polarizers may be further formed on the upper and lower sides of the display device. The polarizers may be configured by a first polarizer and a second polarizer. The first polarizer may be attached onto the lower side of the substrate 110, and the second polarizer may be attached onto the encapsulation layer 390.

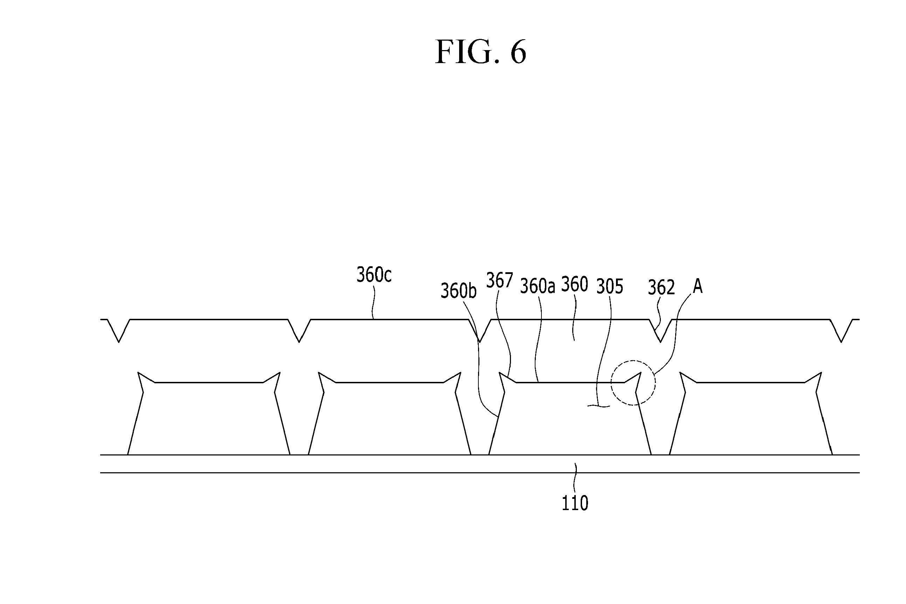

Hereafter, a shape of the roof layer of the display device according to an exemplary embodiment will be described with reference FIG. 6 to FIG. 9.

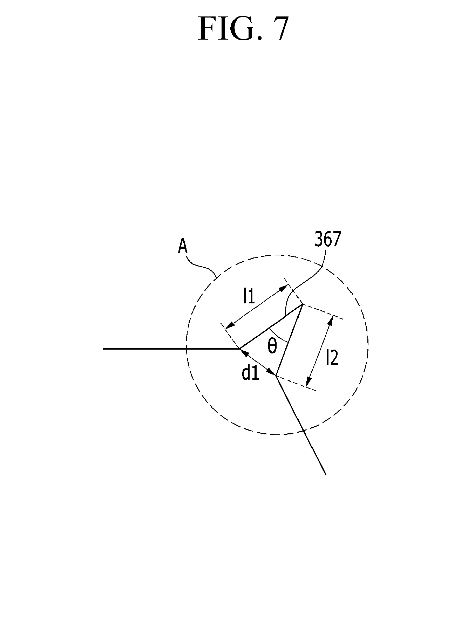

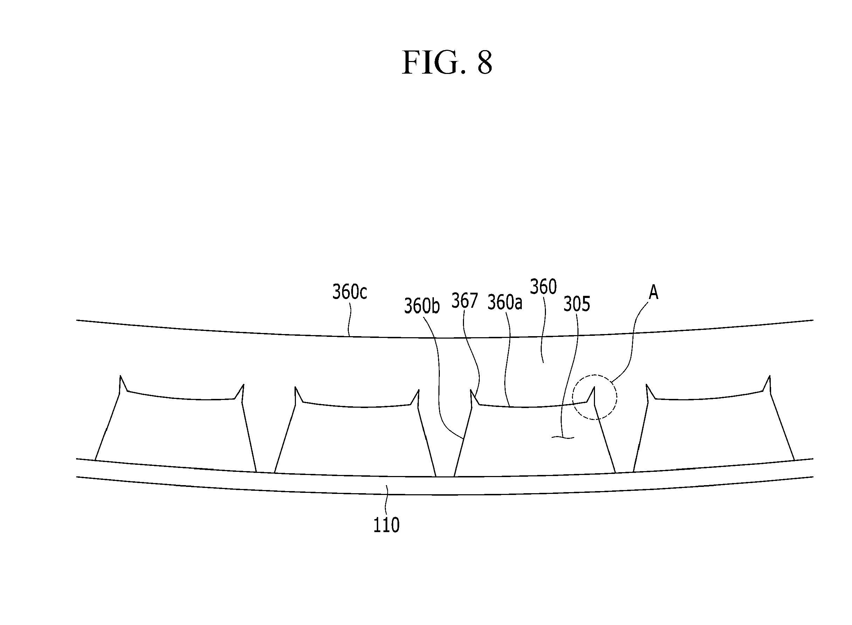

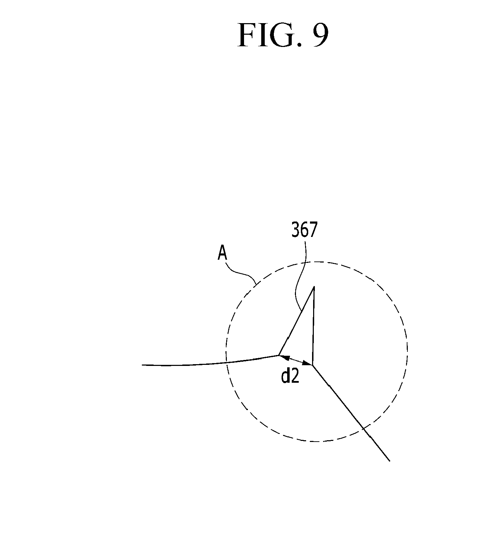

FIG. 6 and FIG, 8 are schematic cross-sectional views of a display device according to an exemplary embodiment, and FIG. 7 and FIG. 9 are enlarged cross-sectional views of a part A of FIG. 6 and FIG. 8, respectively. FIG. 6 and FIG. 7 show a flat state of the substrate 110, and FIG. 8 and FIG. 9 show a bent state of the substrate 110.

As shown in FIG. 6 and FIG. 7, the roof layer 360 is formed on the substrate 110, and the microcavities 305 are positioned under the roof layer 360. The first groove 367 is formed at the corner at which the ceiling surface 360a and the inner wall surface 360b of the roof layer 360 meet, and the second groove 362 is formed at the upper surface 360c of the roof layer 360.

As shown in FIG. 8 and FIG. 9, the substrate 110 may be formed of the flexible material, and the shape of the roof layer 360 is changed according to the bending of the substrate 110. The roof layer 360 is also bent in the same direction as the bending direction of the substrate 110. There are concerns that damage or crack generation may be caused at a portion in which a contraction and an expansion are generated according to the deformation of the roof layer 360.

For example, a pressure may be applied to the corner at which the ceiling surface 360a and the inner wall surface 360b meet according to the bending of the substrate 110. In an exemplary embodiment, the first groove 367 is formed at the corner at which the ceiling surface 360a and the inner wall surface 360b meet, and the deformation of the first groove 367 may be generated according to the bending of the substrate 110. The cross-sectional shape of the first groove 367 may be formed of the "V" shape including two oblique sides. In this case, in the bending state of the substrate, a distance d2 between two oblique sides is reduced compared with the distance d1 between two oblique sides in the flat stage of the substrate. That is, the size of the first groove 367 may be reduced according to the bending of the substrate 110. Accordingly, the pressure applied to the corner at which the ceiling surface 360a and the inner wall surface 360b of the roof layer 360 meet is smooth such that the roof layer 360 may be prevented from being damaged when bending the substrate 110.

If there is no groove at the corner at which the ceiling surface 360a and the inner wall surface 360b meet, a force applied at the corner increases and a crack may be generated at the corner when bending the substrate 110. In an exemplary embodiment of the present invention, the first groove 367 reduces the force applied at the corner.

Lengths 11 and 12 of two oblique sides forming the cross-sectional of the first groove 367 are preferably more than about 3 µm and less than about 35 µm, and an angle θ between two oblique sides is preferably more than about 5 degrees and less than about 75 degrees. In the case that the lengths 11 and 12 of two oblique sides are less than about 3 µm and more than about 35 µm, and the angle θ between two oblique sides is less than about 5 degrees and more than about 75 degrees, when bending the substrate 110, the deformation ratio of the first groove 367 is low such that the effect smoothing the pressure applied to the roof layer 360 is relatively low.

Also, when bending the substrate 110, the pressure may be applied to the upper surface 360c of the roof layer 360. In an exemplary embodiment, the second groove 362 is formed at the upper surface 360c of the roof layer 360 and the deformation of the second groove 362 may be generated according to the bending of the substrate 110. The cross-sectional of the second groove 362 may be made of the "V" shape including two oblique sides. In the process of bending the substrate, the distance between two oblique sides is reduced such that the size of the second groove 362 may be reduced and further the second groove 362 may be disappeared. Accordingly, by smoothing the pressure applied to the upper surface 360c of the roof layer 360, the roof layer 360 may be prevented from being damaged when bending the substrate 110.

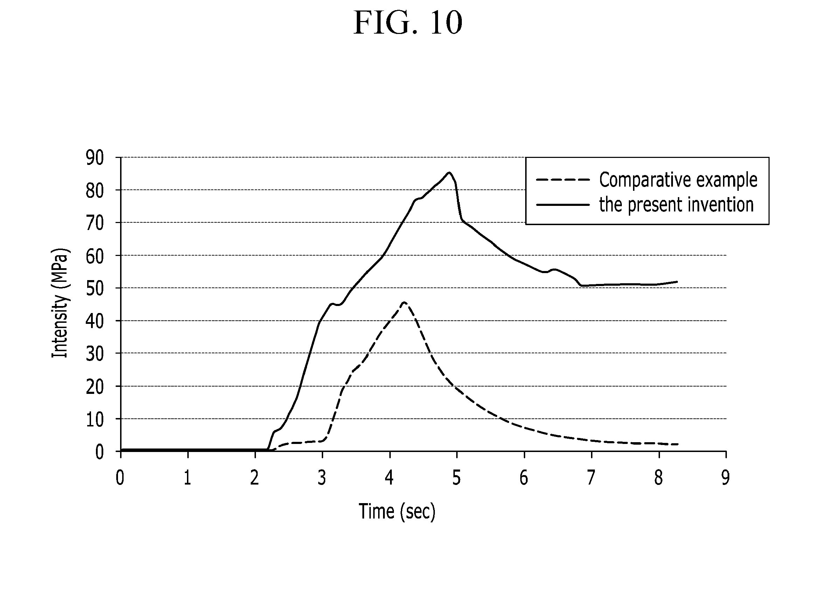

Next, intensity of the roof layer of the display device according to an exemplary embodiment will be described with reference to FIG. 10.

FIG. 10 is a graph showing intensity of a force acting on a roof layer when bending a display device according to an exemplary embodiment along with a comparative example. The force applied to bend the display device and the intensity of the force acting on the roof layer according to the passage of the time are shown. The display device according to an exemplary embodiment has the structure in which the first and second grooves are formed at the roof layer, and in a case of a comparative example, the first groove is not formed at the roof layer.

In the case of the comparative example, if the force is applied to the display device to be bent, the force acting on the roof layer is increased, a maximum intensity of about 45 MPa appears at the position after about 4 seconds, and then the force is sharply decreased. This means that the roof layer may endure the force of about 45 MPa and is damaged if a greater force is applied.

If the force is applied to the display device according to an exemplary embodiment to be bent, the force acting on the roof layer is increased, the maximum intensity of about 85 MPa appears at the position after about 5 seconds, and then the force is sharply decreased. This means that the roof layer may endure the force of about 85 MPa and is damaged if the force exceeds that.

The display device according to an exemplary embodiment includes the roof layer formed with the first groove, thereby smoothing the force acting on the roof layer, and accordingly the larger force may be endured compared with the comparative example.

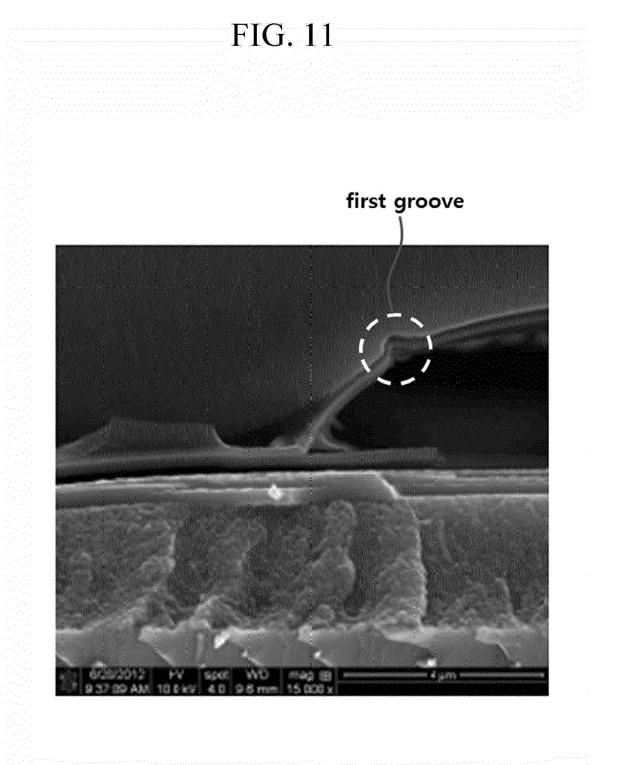

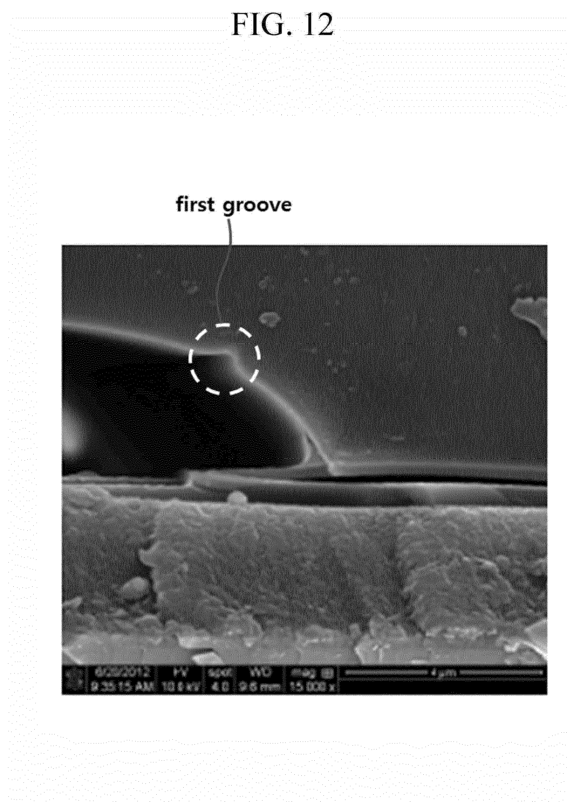

Next, the display device manufactured according to an exemplary embodiment will be described with reference to FIG. 11 and FIG. 12.

FIG. 11 and FIG. 12 are cross-sectional photographs of a display device according to an exemplary embodiment.

Referring to FIG. 11, it may be confirmed that the first groove positioned at the left corner of the roof layer of the display device according to an exemplary embodiment is formed with the "V" shape. Referring to FIG. 12, it may be confirmed that the first groove positioned at the right corner of the roof layer of the display device according to an exemplary embodiment is formed with the "V" shape.

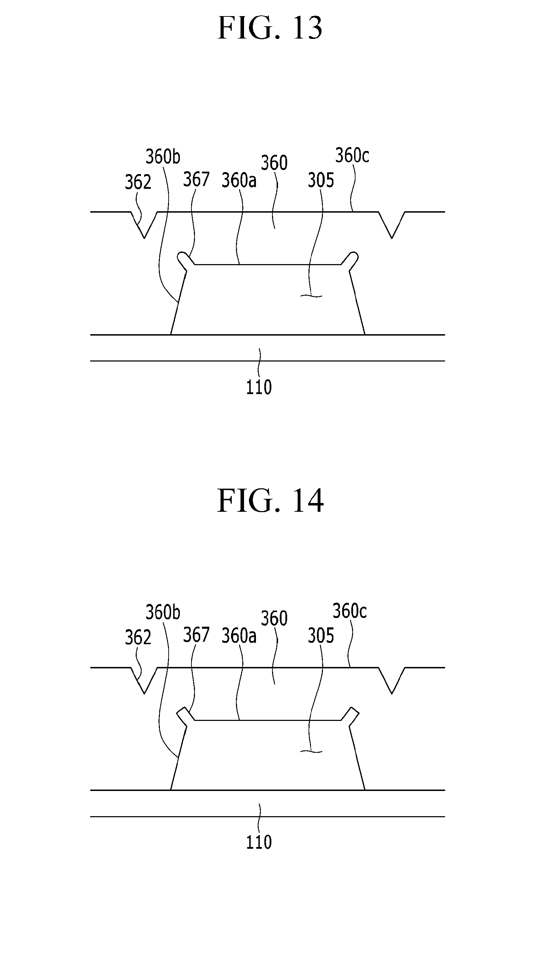

Next, exemplary variations of a display device according to an exemplary embodiment will be described with reference to FIG. 13 to FIG. 20.

FIG. 13 to FIG. 20 are schematic cross-sectional views of exemplary variations of a display device according to an exemplary embodiment. FIG. 13 to FIG. 20 are the same as most of the display device according to an exemplary embodiment shown in FIG. 1 to FIG. 5, except for the shape and the position of the first groove formed at the roof layer. FIG. 13 to FIG. 20 show the substrate 110, the microcavities 305, and the roof layer 360, and the rest of the constituent elements are omitted.

As shown in FIG. 13, the microcavities 305 covered by the roof layer 360 are formed on the substrate 110.

The ceiling surface 360a of the roof layer 360 covers the upper surface of the microcavities 305, and the inner wall surface 360b of the roof layer 360 covers the side surface of the microcavities 305. The first groove 367 is formed at the corner at which the ceiling surface 360a and the inner wall surface 360b of the roof layer 360 meet. The cross-sectional shape of the first groove 367 may be formed of a "U" shape. The "U" shape may be formed of an approximately curved line. The ceiling surface 360a of the roof layer 360 meets the inner wall surface 360b at both sides, thereby including two corners. The first groove 367 may be all formed at both side corners. However, it is not limited thereto, and the first groove 367 may only be formed at any one side corner.

The second groove 362 is formed at the upper surface 360c of the roof layer 360. The cross-sectional shape of the second groove 362 may be formed with the "V" shape.

As shown in FIG. 14, the first groove 367 is formed at the corner at which the ceiling surface 360a and the inner wall surface 360b of the roof layer 360 meet. The cross-sectional shape of the first groove 367 may be formed with a "U" shape. The "U" shape may be formed of an approximately straight line.

FIG. 13 and FIG. 14 show the first groove formed with the "U" shape, however FIG. 13 shows the case formed with the curved line and FIG. 14 shows the case of being formed with the straight line. A difference of the shape of the first groove may be generated according to the change of the process conditions, and the portion of the first groove may be formed of the curved line and the rest of the portion thereof may be formed of the straight line.

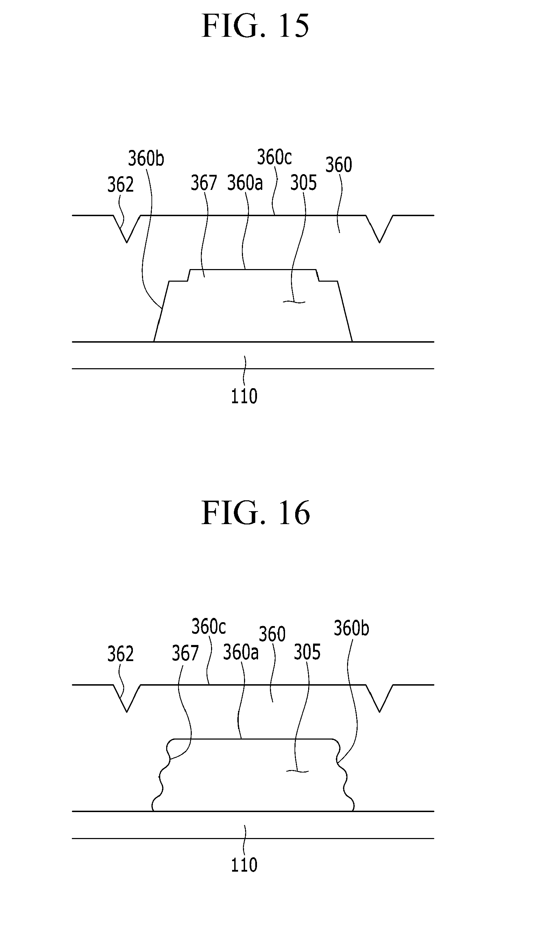

As shown in FIG. 15, the first groove 367 may be formed at the ceiling surface 360a of the roof layer 360. The edge of the ceiling surface 360a of the roof layer 360 remains and the first groove 367 may be entirely formed.

As shown in FIG. 16, the first groove 367 may be formed at the inner wall surface 360b of the roof layer 360. A plurality of first grooves 367 may be respectively formed at the inner wall surface 360b of both sides of the roof layer 360. In this case, the entire shape of the inner wall surface 360b may be formed with a wave shape. However, the embodiments are not limited thereto, and the first groove 367 may only be formed at the inner wall surface 360b of one side of the roof layer 360, and the first groove 367 may be formed at the inner wall surface 360b of the roof layer 360.

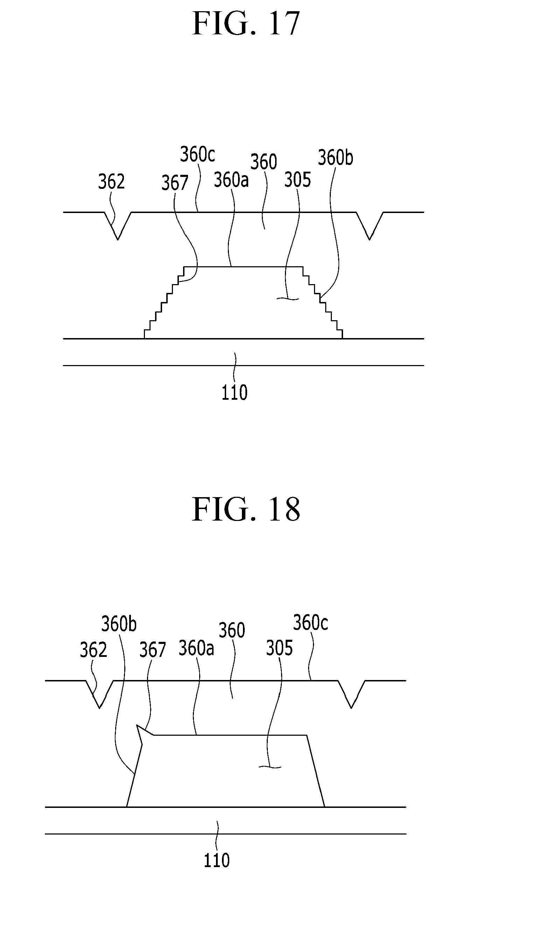

As shown in FIG. 17, the first groove 367 may be formed at the inner wall surface 360b of the roof layer 360, and the entire shape of the inner wall surface 360b may be formed with a step shape. In this case, the first groove 367 may be formed at one side or both sides of the inner wall surface 360b of the roof layer 360.

As shown in FIG. 18, the first groove 367 is formed at the corner at which the ceiling surface 360a and the inner wall surface 360b of the roof layer 360 meet. In this case, the first groove 367 is only formed at the left corner of both corners and is not formed at the right corner.

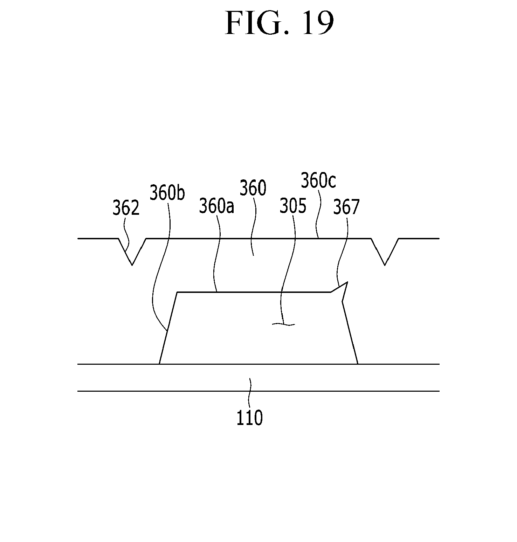

As shown in FIG. 19, the first groove 367 is formed at the corner at which the ceiling surface 360a and the inner wall surface 360b of the roof layer 360 meet. In this case, the first groove 367 is only formed at the right corner of the corners and is not formed at the left corner.

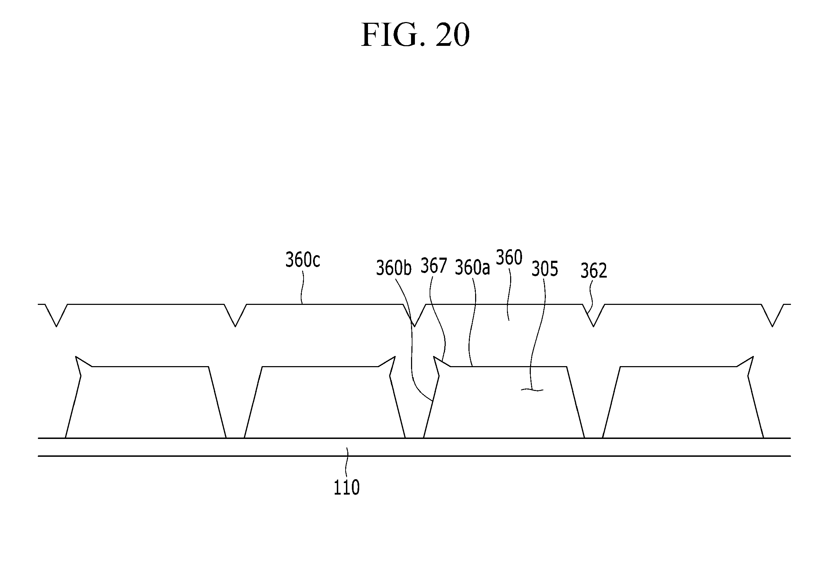

As shown in FIG. 20, the first groove 367 is formed at the corner at which the ceiling surface 360a and the inner wall surface 360b of the roof layer 360 meet. A plurality of microcavities 305 are formed under one roof layer 360. One first groove 367 is formed for each microcavity 305 at the roof layer 360. In this case, the formation position of the first groove 367 is reversed at the adjacent microcavities 305. For example, among a plurality of microcavities 305, the first groove 367 is formed at the left corner in the microcavity 305 positioned at the leftmost side, and the first groove 367 is formed at the right corner in the second microcavity 305. The first groove 367 is formed at the left corner in the third microcavity 305, and the first groove 367 is formed at the right corner in the fourth microcavity 305.

As described above, the first groove 367 is formed at at least one among the ceiling surface 360a, the inner wall surface 360b of the roof layer 360, and the corner at which the ceiling surface 360a and the inner wall surface 360b meet. In the various exemplary embodiments, the cases are shown of forming the first groove 367 at the ceiling surface 360a of the roof layer 360 and forming it at the inner wall surface 360b, and forming it at the corner, however the embodiments are not limited thereto, and it may be formed at all of the ceiling surface 360a, the inner wall surface 360b, and the corner, or two positions thereof. Also, the shape of the first groove 367 may be variously changed.

As described above, by forming the first groove 367 at the partial region of the roof layer 360, when exerting the bending force to the substrate 110, the force acting on the roof layer 360 is smoothed, thereby preventing the damage of the roof layer 360.

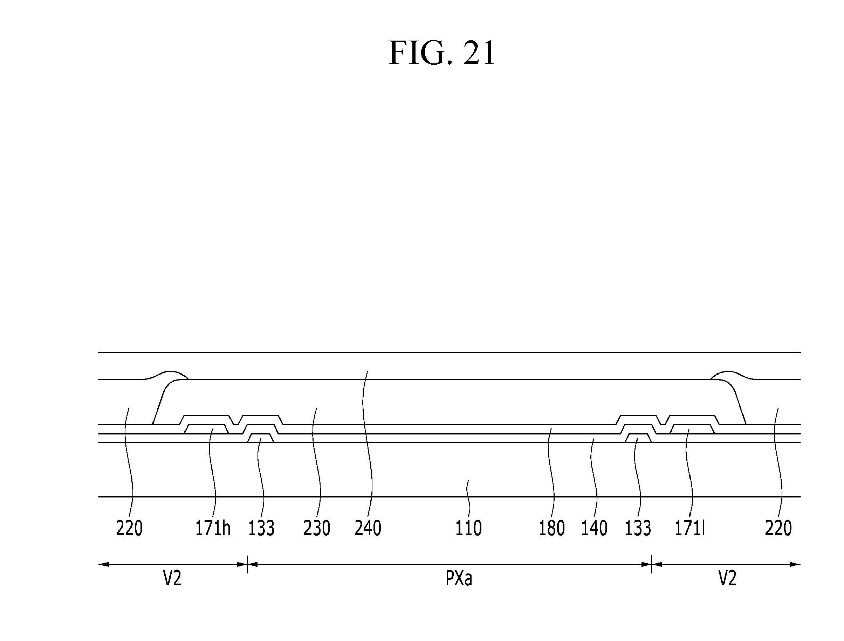

Hereafter, a manufacturing method of a display device according to an exemplary embodiment will be described with reference to FIG. 21 to FIG. 24. Furthermore, FIG. 1 to FIG. 5 will be referred to.

FIG. 21 to FIG. 24 are process cross-sectional views of a manufacturing method of a display device according to an exemplary embodiment.

First, as shown in FIG. 21, a gate line 121 extending in a first direction, and a first gate electrode 124h and a second gate electrode 1241 protruding from the gate line 121, are formed on a substrate 110 made of glass or plastic. The first gate electrode 124h and the second gate electrode 1241 are connected to each other, thereby forming one protrusion.

Further, a storage electrode line 131 separated from the gate line 121 and storage electrodes 133 and 135 protruding from the storage electrode line 131 may be formed together. The storage electrode line 131 extends parallel to the gate line 121. The storage electrode 133 protruding above the storage electrode line 131 may be formed to surround an edge of a first subpixel area PXa, and the storage electrode 135 protruding below the storage electrode line 131 may be formed to be adjacent to the first gate electrode 124h and the second gate electrode 1241.

Next, a gate insulating layer 140 is formed on the gate line 121, the first gate electrode 124h, the second gate electrode 1241, the storage electrode line 131, and the storage electrodes 133 and 135 by using an inorganic insulating material such as a silicon oxide (SiOx) or a silicon nitride (SiNx). The gate insulating layer 140 may be formed as a single layer or a multiple layer.

Next, a first semiconductor 154h and a second semiconductor 1541 are formed by depositing and then patterning a semiconductor material such as amorphous silicon, polycrystalline silicon, and a metal oxide on the gate insulating layer 140. The first semiconductor 154h may be formed to be positioned on the first gate electrode 124h, and the second semiconductor 1541 may be formed to be positioned on the second gate electrode 124I.

Next, a first data line 171h and a second data line 1711 extending in the second direction are formed by depositing and then patterning a metal material. The metal material may be formed as a single layer or a multiple layer.

Further, a first source electrode 173h protruding above the first gate electrode 124h from the first data line 171h and a first drain electrode 175h spaced apart from the first source electrode 173h are formed together. In addition, a second source electrode 1731 protruding above the second gate electrode 1241 from the second data line 1711 and a second drain electrode 1751 spaced apart from the second source electrode 1731 are formed together.

The first and second semiconductors 154h and 1541, the first and second data lines 171h and 1711, the first and second source electrodes 173h and 1731, and the first and second drain electrodes 175h and 1751 may be formed by sequentially depositing and then simultaneously patterning a semiconductor material and a metal material. In this case, the first semiconductor 154h is formed below the first data line 171h, and the second semiconductor 1541 is formed below the second data line 171I.

The first and second gate electrodes 124h and 1241, the first and second source electrodes 173h and 1731, and the first and second drain electrodes 175h and 1751 form first and second thin film transistors (TFTs) Qh and Ql together with the first and second semiconductors 154h and 1541, respectively.

Next, a passivation layer 180 is formed on the first data line 171h, the second data line 1711, the first source electrode 173h, the first drain electrode 175h, the first semiconductor 154h exposed between the first source electrode 173h and the first drain electrode 175h, the second source electrode 1731, the second drain electrode 1751, and the second semiconductor 1541 exposed between the second source electrode 1731 and the second drain electrode 1751. The passivation layer 180 may be made of an organic insulating material or an inorganic insulating material, and may be formed as a single layer or a multiple layer.

A color filter 230 is then formed on the passivation layer 180. The color filter 230 may be formed within the first subpixel PXa and the second subpixel PXb, and may not be formed at the first valley V1. Color filters 230 of the same color may be formed according to the column direction of the plurality of pixel areas PX. For example, when forming the color filter 230 of three colors, the first color filter 230 is firstly formed and then the color filter 230 of the second color filter 230 is formed by shifting a mask.

Next, a light blocking member 220 may be formed on the boundary of each pixel PX on the passivation layer 180 and the thin film transistor by using a material blocking light.

The light blocking member 220 is positioned at the first valley V1 and the second valley V2. The thin film transistors Qh and Ql are positioned in the first valley V1, and the light blocking member 220 is formed to overlap the thin film transistors Qh and Ql. Further, the light blocking member 220 may be formed to additionally overlap the gate line 121 and the storage electrode line 131.

Next, a first insulating layer 240 made of the organic insulating material is formed on the color filter 230 and the light blocking member 220.

The passivation layer 180 and the first insulating layer 240 are patterned to form the first contact hole 181h extending to and exposing at least a portion of the first drain electrode 175h and the second contact hole 1811 extending to and exposing at least a portion of the second drain electrode 1751.

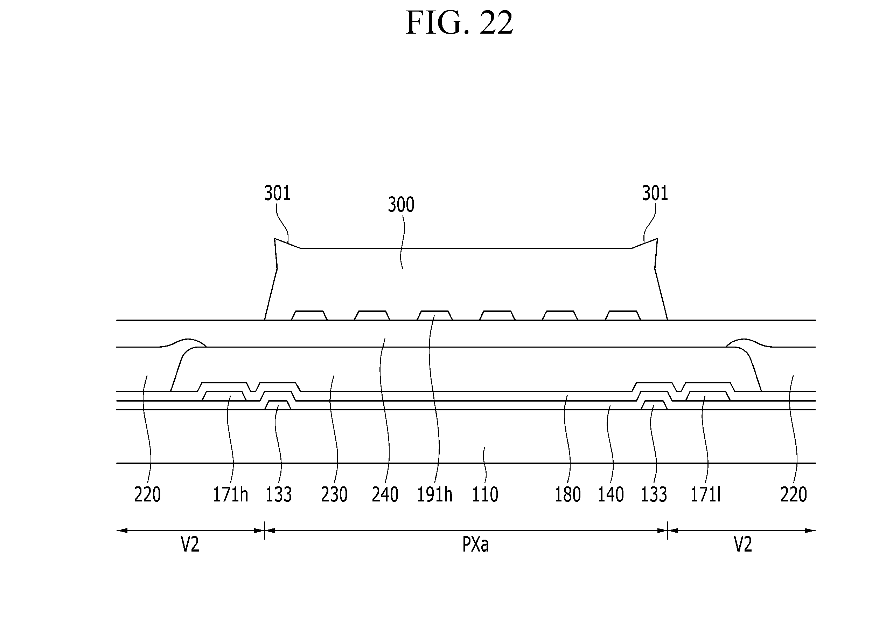

As shown in FIG. 22, a transparent metal material such as ITO or IZO is deposited and patterned on the first insulating layer 240 to form a pixel electrode 191 in the pixel area PX. The pixel electrode 191 includes a first subpixel electrode 191h positioned in the first subpixel area PXa, and a second subpixel electrode 1911 positioned in the second subpixel area PXb. The first subpixel electrode 191h and the second subpixel electrode 1911 are separated from each other with the first valley V1 therebetween.

Horizontal stems 193h and 1931, and vertical stems 192h and 1921 crossing the horizontal stems 193h and 1931 are formed in the first subpixel electrode 191h and the second subpixel electrode 1911, respectively. Further, a plurality of minute branches 194h and 1941, which obliquely extend from the horizontal stems 193h and 1931 and the vertical stems 192h and 1921, are formed.

Subsequently, a sacrificial layer 300 is formed on the pixel electrode 191 and the first insulating layer 240. The sacrificial layer 300 may be formed in a column direction. The sacrificial layer 300 may be formed in each pixel PX and the first valleys V1, but may not be formed in the second valleys V2.

A protrusion 301 is formed at the corner at which both side surfaces and the upper surface of the sacrificial layer 300 meet. The cross-sectional shape of the protrusion 301 may be formed with the "V" shape.

The protrusion 301 is formed at the both side corners of the sacrificial layer, however the embodiments are not limited thereto. The protrusion 301 may be formed at one side corner of the sacrificial layer. The cross-sectional shape of the protrusion 301 is not limited to the "V" shape and may have various shapes. For example, the cross-sectional shape of the protrusion 301 may be formed of the "U" shape, the curved line, or the straight line. The protrusion 301 may be formed at the upper surface of the sacrificial layer 300. Also, the protrusion 301 may be formed at the side surface of the sacrificial layer 300, and the side surface of the sacrificial layer 300 may be formed of the wave shape or the step shape.

After patterning the sacrificial layer 300, a preliminary hardening process is performed, and in this process, the side surface of the sacrificial layer 300 is inclined.

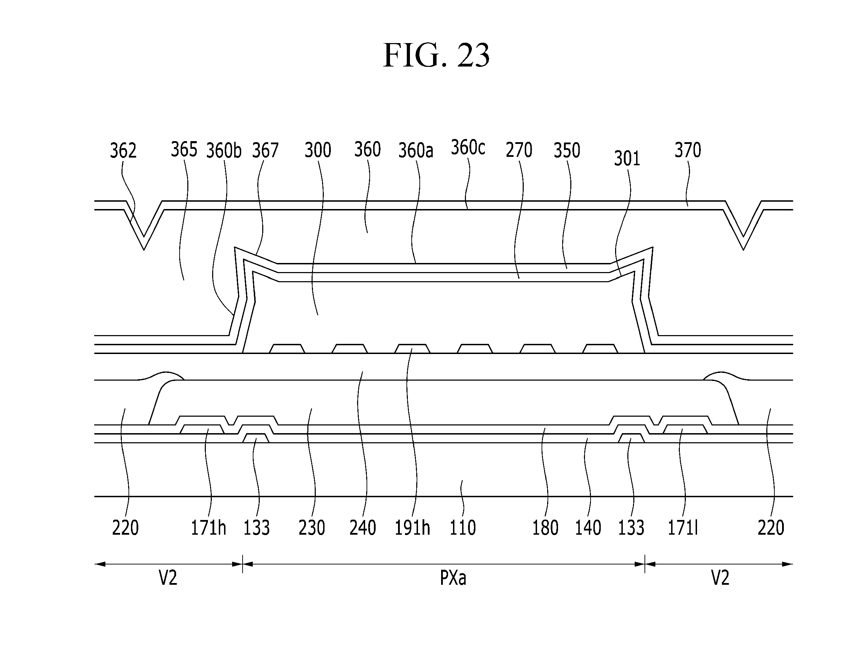

As illustrated in FIG. 23, the common electrode 270 is formed by depositing a transparent metal material such as indium tin oxide (ITO) and indium zinc oxide (IZO) on the sacrificial layer 300, and a photosensitive film is coated on the common electrode 270.

Next, a second insulating layer 350 formed of the inorganic insulating material such as a silicon oxide or a silicon nitride is formed on the common electrode 270.

An organic material is then coated and patterned on the second insulating layer 350 to form the roof layer 360. In this case, the patterning may be performed to remove the organic material positioned at the first valley V1. Accordingly, the roof layer 360 is formed with a shape in which the roof layer 360 is connected along a plurality of pixel rows.

The first groove 367 is formed at the corner at which the ceiling surface 360a and the inner wall surface 360b of the roof layer 360 meet. The cross-sectional shape of the first groove 367 may be a "V" shape. The ceiling surface 360a of the roof layer 360 meets the inner wall surface 360b of both sides, thereby including two corners. The first groove 367 may be formed at both side corners of the roof layer 360.

The first groove 367 of the roof layer 360 is positioned on the protrusion 301 of the sacrificial layer 300. The position and the shape of the first groove 367 of the roof layer 360 are determined according to the position and the shape of the protrusion 301 of the sacrificial layer 300. Also, the common electrode 270 position between the roof layer 360 and the sacrificial layer 300 may be formed of the shape in which the corner at which the ceiling surface and the inner wall surface meet is protruded according to the shape of the roof layer 360.

The position and the shape of the protrusion 301 of the sacrificial layer 300 may be variously changed, as described above, such that the position and the shape of the first groove 367 of the roof layer 360 may also be variously changed. For example, the first groove 367 of the roof layer 360 may only be formed at one side corner of both side corners. The cross-sectional shape of the first groove 367 may be various, for example, the "U" shape. The first groove 367 may be formed at the ceiling surface 360a of the roof layer 360. Also, the first groove 367 may be formed at the inner wall surface 360b of the roof layer 360, and in this case, the entire shape of the inner wall surface 360b may be formed of the wave shape or the step shape.

The second groove 362 may be formed at the upper surface 360c of the roof layer 360. The cross-sectional shape of the second groove 362 may be formed of the "V" shape.

A partition 365 is formed between a plurality of microcavities 305, and the partition 365 forms a portion of the roof layer 360. The partition 365 is formed at the second valley V2, thereby separating the adjacent microcavities 305. The second groove 362 is positioned at the upper surface of the partition 365 of the roof layer 360. Accordingly, the second groove 362 is positioned at the second valley V2.

After patterning the roof layer 360, a light is irradiated to the roof layer 360 for performing a hardening process. The hardening process hardens the roof layers 360. Accordingly, even when a space is generated below the roof layers 360, the shape of the roof layers 360 can be maintained.

The second insulating layer 350 and the common electrode 270 are then patterned by using the roof layer 360 as a mask to remove the exposed portions of the third insulating layer 350 and the common electrode 270 which are positioned at the first valleys V1.

Next, the third insulating layer 370 may be formed on the roof layer 360 by using an inorganic insulating material such as a silicon nitride (SiNx) and a silicon oxide (SiOx). The third insulating layer 370 is patterned to remove the third insulating layer 370 positioned at the first valley V1.

By patterning the roof layer 360, the second insulating layer 350, the common electrode 270, and the third insulating layer 370, the sacrificial layer 300 positioned at the first valley V1 is exposed outside.

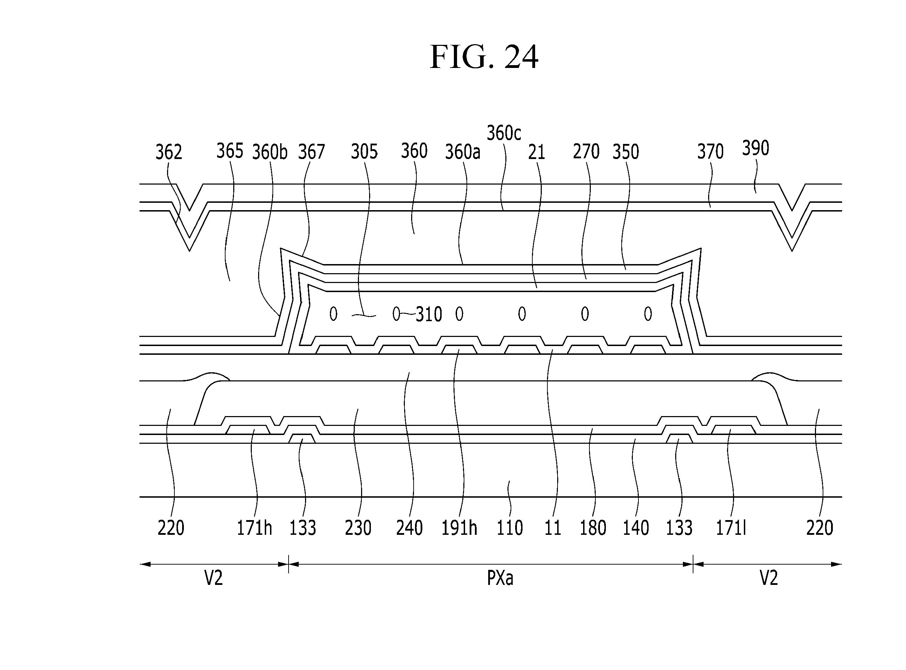

As shown in FIG. 24, the sacrificial layer 300 is fully removed by applying a developer or a stripper solution on the substrate 110 where the sacrificial layer 300 is exposed, or the sacrificial layer 300 is fully removed by using an ashing process.

When the sacrificial layer 300 is removed, the microcavity 305 is generated at a portion where the sacrificial layer 300 is positioned.

The pixel electrode 191 and the roof layer 360 are separated via the microcavities 305. The roof layer 360 is formed to cover the upper surface and both side surfaces of the microcavity 305.

The microcavity 305 is exposed to the outside through portions where the roof layer 360 and the common electrode 270 are removed, which are injection holes 307a and 307b. Two injection holes 307a and 307b may be formed in one microcavity 305, for example, a first injection hole 307a through which a lateral surface of a first edge of the microcavity 305 is exposed, and a second injection hole 307b through which a lateral surface of a second edge of the microcavity 305 is exposed, may be formed. The first edge and the second edge face each other, and for example, the first edge may be the upper edge of the microcavity 305, and the second edge may be the lower edge of the microcavity 305.

Next, when an aligning agent containing an alignment material is dripped on the substrate 110 by a spin coating method or an inkjet method, the aligning agent is injected into the microcavity 305 through the injection holes 307a and 307b. When the aligning agent is injected into the microcavity 305 and then a curing process is performed, a solution component is evaporated and the alignment material remains at an inner wall of the microcavity 305.

Accordingly, a first alignment layer 11 may be formed on the pixel electrode 191, and a second alignment layer 21 may be formed below the common electrode 270. The first alignment layer 11 and the second alignment layer 21 are formed to face each other with the microcavity 305 therebetween, and to be connected to each other at the side wall of the edge of the microcavity 305.

In this case, the first and second alignment layers 11 and 21 may be aligned in a direction perpendicular to the substrate 110 except at the lateral surface of the microcavity 305.

Subsequently, when a liquid crystal material is dripped on the substrate 110 by an inkjet method or a dispensing method, the liquid crystal material is injected into the microcavity 305 through the injection holes 307a and 307b by a capillary force. Accordingly, the liquid crystal layer made of liquid crystal molecules 310 is formed inside the microcavities 305.

An encapsulation layer 390 is then formed by depositing a material which does not react with the liquid crystal molecules 310 on the third insulating layer 370. The encapsulation layer 390 is formed to cover the injection holes 307a and 307b, thereby sealing the microcavity 305 so that the liquid crystal molecules 310 formed in the microcavity 305 are not discharged to the outside.

Next, although not illustrated, polarizers may be further attached onto the upper and lower surfaces of the display device. The polarizers may include a first polarizer and a second polarizer. The first polarizer may be attached onto the lower surface of the substrate 110, and the second polarizer may be attached onto the encapsulation layer 390.

**<Description of symbols>**

| | |
|---|---|
| 110: substrate | 121: gate line |
| 131: storage electrode line | 171: data line |
| 191: pixel electrode | 220: light blocking member |
| 230: color filter | 300: sacrificial layer |
| 301: protrusion | 305: microcavities |
| 307a, 307b: injection hole | 360: roof layer |
| 360a: ceiling surface of a roof layer | 367: first groove |
| 360b: inner wall surface of a roof layer | 362: second groove |
| 360c: upper surface of a roof layer | 390: encapsulation layer |

## Claims

1. A display device comprising:
a substrate (110);
a thin film transistor disposed on the substrate (110);
a pixel electrode (191) connected to the thin film transistor;
a roof layer (360) disposed on the pixel electrode (191) to be spaced apart from the pixel electrode (191) with a plurality of microcavities (305) therebetween;
a first groove (367) disposed at at least one of a ceiling surface of the roof layer (360), an inner wall surface of the roof layer (360), and a corner at which the ceiling surface and the inner wall surface meet;
a liquid crystal layer filling the microcavities (305); and
an encapsulation layer (390) disposed on the roof layer (360) to seal the microcavities (305).

2. The display device of claim 1, further comprising
a second groove (362) disposed at an upper surface of the roof layer (360).

3. The display device of claim 2, wherein
the second groove (362) is positioned between the adjacent microcavities (305).

4. The display device of claim 2, wherein
the first groove (367) and the second groove (362) have a "V" shape.

5. The display device of claim 1, wherein
the first groove (367) is positioned at the corner and has a "V" shape or a "U" shape.

6. The display device of claim 5, wherein
the first groove (367) is positioned at at least one side corner among both side corners of the roof layer (360).

7. The display device of claim 1, wherein
the first groove (367) is positioned at the inner wall surface of the roof layer (360), and the inner wall surface has a wave shape or a step shape.

8. The display device of claim 1, wherein
a cross-section of the first groove (367) includes two oblique sides, and a length of the two oblique sides is more than about 3 µm and less than about 35 µm.

9. The display device of claim 8, wherein
an angle between two oblique sides is more than about 5 degrees and less than about 75 degrees.

10. The display device of claim 1, wherein
the substrate (110) comprises a flexible material.

11. The display device of claim 10, wherein
the deformation of the first groove (367) is changed according to bending of the substrate (110).

12. The display device of claim 11, wherein
a size of the first groove (367) is reduced according to the bending of the substrate (110).

13. The display device of claim 12, wherein
the roof layer (360) comprises an organic layer.

## Amended claims

### Amended claims in accordance with Rule 137(2) EPC.

1. A display device comprising:
a substrate (110);
a thin film transistor disposed on the substrate (110);
a pixel electrode (191) connected to the thin film transistor;
a roof layer (360) disposed on the pixel electrode (191) to be spaced apart from the pixel electrode (191) with a plurality of microcavities (305) therebetween;
a common electrode (270) disposed under the roof layer (360);
a liquid crystal layer disposed in the microcavities (305); and
an encapsulation layer (390) disposed on the roof layer (360) to seal the microcavities (305)
**characterized in that**
a first groove (367) is provided at at least one of a ceiling surface (360a) of the roof layer (360), an inner side wall surface (360b) of the roof layer (360), and a corner at which the ceiling surface (360a) and the inner side wall surface (360b) meet.

2. The display device of claim 1, further comprising
a second groove (362) disposed at an upper surface (360c) of the roof layer (360).

3. The display device of claim 2, wherein
the second groove (362) is positioned between the adjacent microcavities (305).

4. The display device of claim 2, wherein
the first groove (367) and the second groove (362) have a "V" shape.

5. The display device of claim 1, wherein
the first groove (367) is positioned at the corner and has a "V" shape or a "U" shape.

6. The display device of claim 5, wherein
the first groove (367) is positioned at at least one side corner among both side corners of the roof layer (360).

7. The display device of claim 1, wherein
the first groove (367) is positioned at the inner side wall surface (360b) of the roof layer (360), and the inner side wall surface (360b) has a wave shape or a step shape.

8. The display device of claim 1, wherein
a cross-section of the first groove (367) includes two oblique sides, and a length of the two oblique sides is more than about 3 µm and less than about 35 µm.

9. The display device of claim 8, wherein
an angle between two oblique sides is more than about 5 degrees and less than about 75 degrees.

10. The display device of claim 1, wherein
the substrate (110) comprises a flexible material.

11. The display device of claim 10, wherein
the deformation of the first groove (367) is changed according to bending of the substrate (110).

12. The display device of claim 11, wherein
a size of the first groove (367) is reduced according to the bending of the substrate (110).

13. The display device of claim 12, wherein
the roof layer (360) comprises an organic layer.
